# EUROPEAN PATENT APPLICATION

(11) **EP 4 481 546 A1**
(43) Date of publication of application: **25.12.2024**
(21) Application number: 24182799.7
(22) Date of filing: 18.06.2024
(51) Int. Cl.: G06F 3/04847, G06F 3/04883, H04M 1/22, H04M 19/04, G06F 3/16

(54) **MOBILE TERMINAL AND METHOD FOR CUSTOMIZING A SHOW EFFECT**

(30) Priority: 19.06.2023 CN 202310729356
(71) Applicant: Nothing Technology Limited, London EC2V 6EE (GB)
(72) Inventor: ZHU, Raymond Rongle, London (GB); CHEN, Heliang, Shenzhen (CN); YAN, Weibo, Shenzhen (CN); VIEGAS, Bruno, London (GB); RIDLEY, Tom, London (GB)
(74) Representative: EIP

(57) **Abstract**

A method for customizing a show effect includes an edit interface and a show unit. The edit interface includes a plurality of input areas. The method includes: generating a plurality of input signals in response to a plurality of times of operations applied on at least one of the plurality of input areas, respectively; controlling the show unit to show in accordance with the show effect corresponding to the at least one of the plurality of input areas that is operated at the corresponding time in response to each of the plurality of input signals in turn; recording the show effect corresponding to each of the plurality of input signals to generate an effect show file.

## Description

### CROSS-REFERENCE TO RELATED APPLICATIONS

This application claims the benefit of priority to Chinese application No. 2023107293568, filed June 19, 2023, the contents of which are incorporated herein by reference in their entirety.

### TECHNICAL FIELD

The present disclosure relates to a field of mobile terminal, and in particular to a mobile terminal and its customization method for show effect.

### BACKGROUND

In the past decade or so, with a comprehensive and rapid development of science and technology, there have been many examples of technology changing life. In other words, because of the rapid development of science and technology, consumers put forward higher requirements on the functionality of electronic products. Ringtones are a way for mobile terminals to notify users of current messages. However, the current cell phone ringtones are either system-provided or need to be downloaded from specific websites, which cannot satisfy personalized ringtone needs of everyone.

### SUMMARY

The present disclosure provides a mobile terminal and a method for customizing a show effect

In a first aspect, the present disclosure provides a customization method for show effect, which is applied to a mobile terminal. The mobile terminal includes an edit interface and a show unit. The edit interface includes a plurality of input areas. The method for customizing a show effect includes: generating a plurality of input signals in response to a plurality of times of operations applied on at least one of the plurality of input areas, respectively; wherein the plurality of input signals are arranged in chronological order, and at least one of the plurality of input areas being operated on each time, and the input areas being operated on each time are the same or at least partially different, and each of the plurality of input signals is generated by at least one of the plurality of input areas that is operated at the corresponding time, and each of the input areas has a predetermined show effect; controlling the show unit to show in accordance with the show effect corresponding to the at least one of the plurality of input areas that is operated at the corresponding time in response to each of the plurality of input signals in turn; recording the show effect corresponding to each of the plurality of input signals to generate an effect show file.

As used herein, controlling the show unit to show may comprise controlling the show unit to illuminate, sound, and/or otherwise operate to present/play one or more show effects

In a second aspect, the present disclosure provides a mobile terminal. The mobile terminal includes an edit interface and a show unit; the edit interface includes a plurality of input areas; the mobile terminal further includes a processor and a storage unit; the storage unit stores a computer program; and the processor runs the computer program to execute a customization method for show effect, specifically including: generating a plurality of input signals in response to a plurality of times of operations applied on at least one of the plurality of input areas, respectively; wherein the plurality of input signals are arranged in chronological order, and at least one of the plurality of input areas being operated on each time, and the input areas being operated on each time are the same or at least partially different, and each of the plurality of input signals is generated by at least one of the plurality of input areas that is operated at the corresponding time, and each of the input areas has a predetermined show effect; controlling the show unit to show in accordance with the show effect corresponding to the at least one of the plurality of input areas that is operated at the corresponding time in response to each of the plurality of input signals in turn; recording the show effect corresponding to each of the plurality of input signals to generate an effect show file.

In a third aspect, the present disclosure provides a computer-readable storage medium. The computer-readable storage medium stores a computer program, the computer program is capable of being run by a processor to execute a customization method for show effect, including: generating a plurality of input signals in response to a plurality of times of operations applied on at least one of the plurality of input areas, respectively; wherein the plurality of input signals are arranged in chronological order, and at least one of the plurality of input areas being operated on each time, and the input areas being operated on each time are the same or at least partially different, and each of the plurality of input signals is generated by at least one of the plurality of input areas that is operated at the corresponding time, and each of the input areas has a predetermined show effect; controlling the show unit to show in accordance with the show effect corresponding to the at least one of the plurality of input areas that is operated at the corresponding time in response to each of the plurality of input signals in turn; recording the show effect corresponding to each of the plurality of input signals to generate an effect show file.

### BRIEF DESCRIPTION OF THE ACCOMPANYING DRAWINGS

In order to more clearly illustrate the technical solutions in the embodiments of the present disclosure, a brief description of the accompanying drawings to be used in the embodiments will be given below. Obviously, for a person of ordinary skill in the art, the accompanying drawings in the following description are only some embodiments of the present disclosure, and other accompanying drawings can be obtained on the basis of these drawings without any creative work.
FIG. 1 illustrates a structural schematic view of a mobile terminal in accordance with one embodiment of the present disclosure.
FIG. 2 illustrates a cross-sectional view of a mobile terminal in accordance with one embodiment of the present disclosure.
FIG. 3 illustrates a module diagram of a mobile terminal in accordance with one embodiment of the present disclosure.
FIG. 4 illustrates a flowchart view of a customization method for show effect in accordance with one embodiment of the present disclosure.
FIG. 5 illustrates an edit interface view of a mobile terminal in accordance with one embodiment of the present disclosure.
FIG. 6 illustrates an edit interface view in accordance with one embodiment of the present disclosure when recording and generating an effect show file.
FIGS. 7A to 7B illustrate schematic diagrams of a process of switching audio packets of the edit interface in accordance with one embodiment of the present disclosure.
FIG. 8 illustrates a module diagram of a customization device for show effect in accordance with one embodiment of the present disclosure.

### DETAILED DESCRIPTION OF ILLUSTRATED EMBODIMENTS

Embodiments of the present disclosure are described in detail below, and examples of the embodiments are shown in the accompanying drawings, where the same or similar labeling throughout denotes the same or similar elements or elements having the same or similar functions. The embodiments described below by reference to the accompanying drawings are exemplary and are intended to be used for explaining the present disclosure and are not to be construed as a limitation of the present disclosure.

Furthermore, the terms "first" and "second" are used for descriptive purposes only and are not to be understood as indicating or implying relative importance or implicitly specifying the number of technical features indicated. Thus, a feature defined with "first" or "second" may include one or more such features, either explicitly or implicitly. In the description of the present disclosure, "a plurality of' or "multiple" means two or more, unless otherwise expressly and specifically limited.

In this disclosure, unless otherwise expressly specified and limited, the terms "connected", "fixed", etc. are to be understood broadly, e.g., they may be fixed, removable, or integral; they may be mechanically connected or electrically connected; they may be directly connected or indirectly connected through an intermediate medium, interconnected within two elements or an interactive relationship between two elements. For those of ordinary skill in the art, the specific meanings of the above terms in this disclosure may be understood on a case-by-case basis.

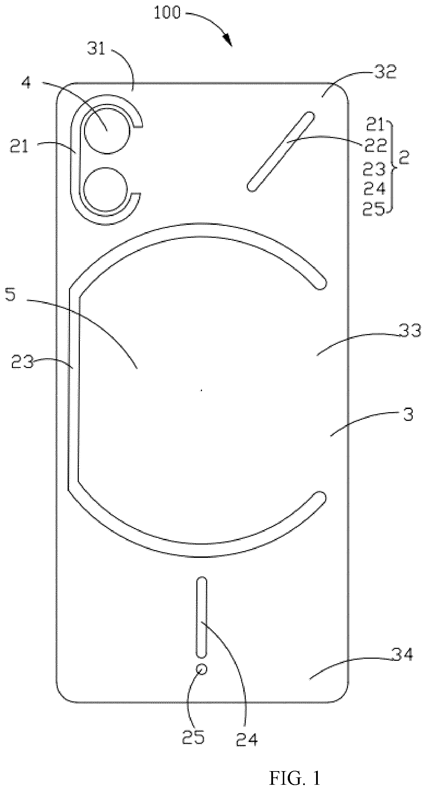

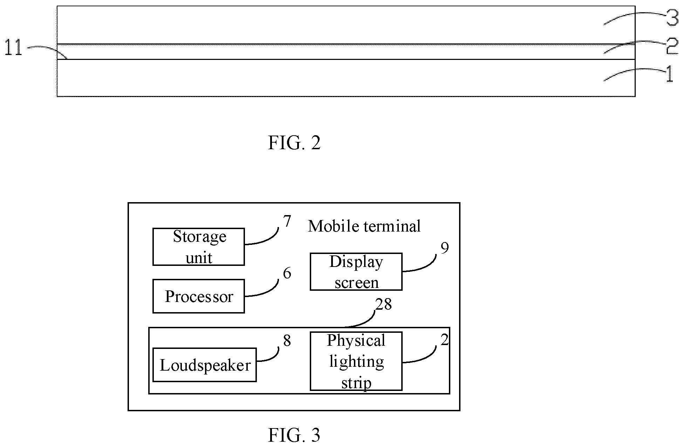

Referring to FIGS. 1 and 2, FIG. 1 illustrates a structural schematic view of a mobile terminal 100 in accordance with one embodiment of the present disclosure; FIG. 2 illustrates a cross-sectional view of the mobile terminal 100 in accordance with one embodiment of the present disclosure. It is to be noted that the mobile terminal 100 described hereinafter in the present disclosure may be, but is not limited to, a portable mobile terminal having at least one physical lighting strip disposed at a back side thereof, such as a cell phone, a tablet computer, a laptop, and the like. In this embodiment, the mobile terminal 100 is a cell phone. The mobile terminal 100 includes a main body 1, at least one physical lighting strip 2 located at a back side 11 of the main body 1 and a transparent back cover 3. The transparent back cover 3 covers and seals the back side 11 of the main body 1 having the at least one physical lighting strip 2 as a whole. The transparent back cover 3 can transmit light emitted from the at least one physical lighting strip 2. Specifically, in this embodiment, the main body 1 is provided with a rear camera 4 and a rear wireless charging zone 5. The wireless charging zone 5 is connected to a battery of the mobile terminal 100. The wireless charging zone 5 is used for charging and discharging by coupling with an external wireless charging device. Optionally, the back side 11 of the main body 1 is divided into four regions, namely a first region 31 and a second region 32 disposed side by side at a top of the transparent back cover 3, and a third region 33 disposed at a middle of the transparent back cover 3, and a fourth region 34 disposed at a bottom of the transparent back cover 3, where the top, the middle and the bottom are the top, the middle and the bottom of the mobile terminal 100 when the mobile terminal 100 is in a vertical screen state, respectively. The rear camera 4 is located corresponding to the first region 31. The wireless charging area 5 is located corresponding to the third region 33. The at least one physical lighting strip 2 includes a first physical lighting strip 21, a second physical lighting strip 22, a third physical lighting strip 23, a fourth physical lighting strip 24, and a fifth physical lighting strip 25. The first physical lighting strip 21 is disposed substantially in a C-shape within the first region 31 and surrounds the rear camera 4 of the mobile terminal 100. The second physical lighting strip 22 is disposed in the second region 32 in a substantially top-down inclined shape. The third physical lighting strip 23 is disposed in the third region 33 and surrounds the wireless charging area 5 in a substantially C shape. The second physical lighting strip 22 and the third physical lighting strip 23 may form a substantially lollipop shape. The fourth physical lighting strip 24 and the fifth physical lighting strip 25 may be formed in a shape of a generally exclamation mark "!" and be disposed in the fourth area 34. It can be understood that in other embodiments, the quantity, the shape and the location of the at least one physical lighting strip 2 are not so limited, e.g., the third physical lighting strip 23 may be interrupted into a plurality of segments, but the overall structural shape remains a C-shape. As another example, the first physical lighting strip 21 may not be C-shaped, but a ring-shaped structure surrounding the rear camera 4. As another example, the fourth physical lighting strip 24 and the fifth physical lighting strip 25 may be combined into a strip-shaped physical lighting strip, and so on, without limitation herein.

In some embodiments, the transparent back cover 3 may be omitted. In other embodiments, the at least one physical lighting strip 2 as well as the transparent back cover 3 may be omitted. No limitation is made herein.

Referring to FIG. 3, FIG. 3 illustrates a module diagram of the mobile terminal 100 in accordance with one embodiment of the present disclosure. The mobile terminal 100 further includes a processor 6, a storage unit 7, a loudspeaker 8, and a display screen 9. The at least one physical lighting strip 2, the storage unit 7, the loudspeaker 8, and the display screen 9 are connected to the processor 6 respectively. The processor 6 may be a general-purpose processor, a digital signal processor, a special-purpose integrated circuit, an off-the-shelf programmable gate array, or other programmable logic device, a discrete gate or a transistor logic device, a discrete hardware component. The processor may implement or perform the various methods, steps, and logic block diagrams disclosed in the embodiments of the present disclosure. The processor 6 may be an image processor, a microprocessor, or the processor may also be any conventional processor and the like. The storage unit 7 may include: a flash disk, a read-only storage unit (English: Read-Only Memory , abbreviation: ROM), a random access memory (English: Random Access Memory, abbreviation: RAM), a disk or a CD-ROM, and the like. The loudspeaker 8 may be, but is not limited to, a circular resonance chamber loudspeaker, a flat loudspeaker, an ultra-thin diaphragm loudspeaker, a wireless Bluetooth loudspeaker, a horn loudspeaker, a tweeter loudspeaker, a bass loudspeaker, a two-way or three-way speakers, etc. The display screen 9 may be, but is not limited to liquid crystal display screen (LCD), organic light emitting diode display screen (OLED), plasma display screen (Plasma), light emitting diode display screen (LED), curved display screen, touch screen (show with touch screen), etc. It can be understood that in other embodiments, the hardware included in the mobile terminal 100 may be added or subtracted from the processor 6, the storage unit 7, the loudspeaker 8, and the display screen 9, without limitation herein.

In some embodiments, the storage unit 7 stores a computer program. The processor 6 runs the computer program to execute a customization method for show effect. The storage unit 7 also stores a plurality of data related to the execution of the customization method for show effect.

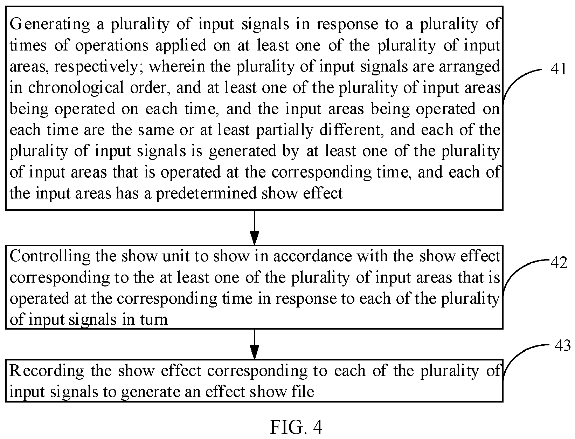

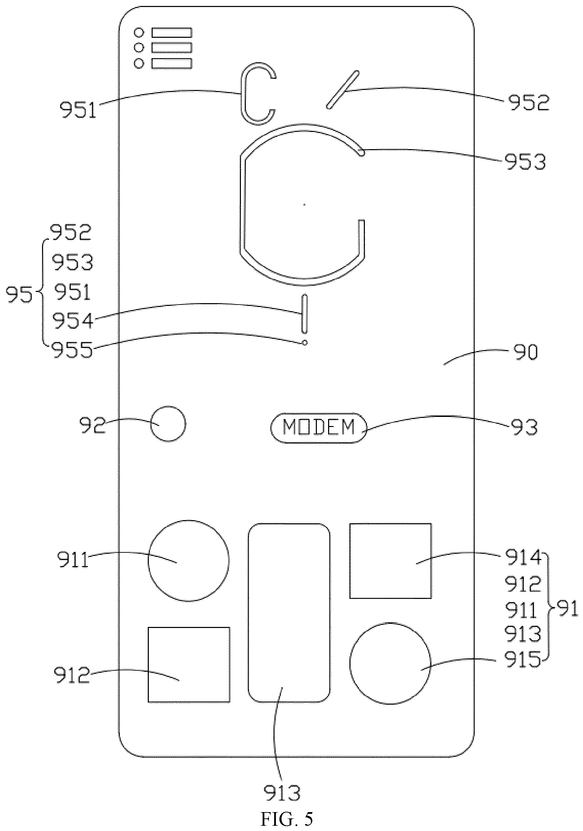

Referring to FIG. 4, FIG. 4 illustrates a flowchart view of a customization method for show effect in accordance with one embodiment of the present disclosure. The customization method for show effect is applied to a mobile terminal 100 described above. Referring together to FIG. 5, the mobile terminal 100 includes an edit interface 90. The edit interface 90 includes a plurality of input areas 91. The plurality of input areas 91 are virtual and/or physical keys. Referring again to FIG. 3, the mobile terminal 100 further includes a show unit 28. The plurality of input areas 91 and the show unit 28 are each connected to the processor 6. The customization method for show effect includes following steps.

Block 41: a plurality of input signals are generated in response to a plurality of times of operations applied on at least one of the plurality of input areas 91, where the plurality of input signals are arranged in chronological order, a quantity of the at least one of the plurality of input areas 91 being operated on each time includes at least one, the input areas 91 being operated on each time are the same or at least partially different, each of the plurality of input signals is generated by the at least one of the plurality of input areas 91 that is operated at the corresponding time, and each of the input areas 91 has a predetermined show effect.

Block 42: the show unit 28 is controlled to show in accordance with the show effect corresponding to the at least one of the plurality of input areas 91 that is operated at the corresponding time in response to each of the plurality of input signals.

Block 43: the show effect corresponding to each of the plurality of input signals is recorded to generate an effect show file.

Therefore, the present disclosure is able to generate a plurality of input signals by operating at least one of the plurality of input areas 91 in accordance with the needs of individual creation, and control the show unit 28 to show in accordance with the show effect corresponding to the at least one of the plurality of input areas 91 that is operated at the corresponding time in response to each of the plurality of input signal in turn, and record the show effect corresponding to each of the plurality of input signals to generate an effect show file, which can better express the needs of the user's creation, and further meet the user's personalized needs, enhance the user experience, and enhance user stickiness.

In some embodiments, the at least one of the plurality of input areas 91 that is operated at the corresponding time may be one input area 91 being operated or a plurality of input areas 91 being operated at the same time, without limitation herein. For example, the first operation includes an operation applied on one input area 91 and the second operation includes simultaneous operations applied on two input areas 91.

In some embodiments, one time of operation refers to an operation when a user operates between touching the input area 91 and leaving the input area 91, for example, operating one input area 91 for the first time and operating two input areas 91 simultaneously for the second time, with the first operation of the one input area 91 as one time of operation and the second simultaneous operation of the two input areas 91 also as another time of operation.

In some embodiments, controlling the show unit 28 to show in accordance with the show effect corresponding to the at least one of the plurality of input areas 91 that is operated at the corresponding time in response to each of the plurality of input signals in turn, including:
determining the at least one of the plurality of input areas 91 that is operated at the corresponding time for each of the plurality of input signals, where teach of the plurality of input signals includes a signal generated by one of the plurality of input areas 91 that is operated at the corresponding time, or a combination of signals generated by multiple of the plurality of input areas 91 that are operated at the corresponding time;
determining a target show effect corresponding to each of the plurality of input signals in accordance with a correspondence between the input area 91 and the show effect;
controlling the show unit 28 to show in accordance with the target show effect corresponding to each of the plurality of input signals.

In some embodiments, the target show effect corresponding to the input signal is divided into two cases. The first case is a case where there is only one input area 91 that is operated at the corresponding time, therefore, one input area 91 corresponds to only one kind of show effect, and the target show effect corresponding to the input signal is that of the input area 91. The second case is a case where there are more than one input area 91 that are operated at the corresponding time, therefore, more than one input area 91 each corresponds to one kind of show effect, and the target show effect of the input signal is a combination of the show effects corresponding to each of the more than one input area 91.

Therefore, the plurality of input areas 91 each have a different key value, i.e., the key value can be understood as a number, a serial number, etc., of each of the different input areas 91. Accordingly, the input signal generated when different input areas 91 are operated contains the key values of the input areas 91 that are operated at the corresponding time; based on the key values, the input areas 91 that are operated at the corresponding time can be determined for each input signal; and the target show effect corresponding to each input signal can be further determined in accordance with a correspondence between the input area 91 and the show effect, and the show unit 28 is controlled to show in accordance with the target show effect corresponding to each input signal.

In some embodiments, generating a plurality of input signals in response to a plurality of times of operations applied on at least one of the plurality of input areas 91, includes:
generating different input signals in response to different operations on the same input area 91, where the different input signals correspond to different show effects, the different operations include operations having at least one of a different operation duration, a different operation pressure, or a different sliding speed; the different show effects include a show effect having at least one of a different volume, a different tone, a different light color, a different light brightness, a different light-up duration, or a different flashing times.

For example, the higher the operating pressure, the higher the corresponding volume, whereby the operating pressure and the volume have a correspondence. For another example, different operation duration for the same input area 91 correspond to different show effects, with an operation of 1 second matching a first show effect and an operation of 3 seconds matching a second show effect, the first show effect being different from the second show effect. Thereby, the operation duration and the show effect also have a correspondence.

Therefore, by matching different show effects with different operations, it can better fit the creative needs expressed by the user, further satisfy the personalized needs of the user, enhance the user experience, and improve user stickiness.

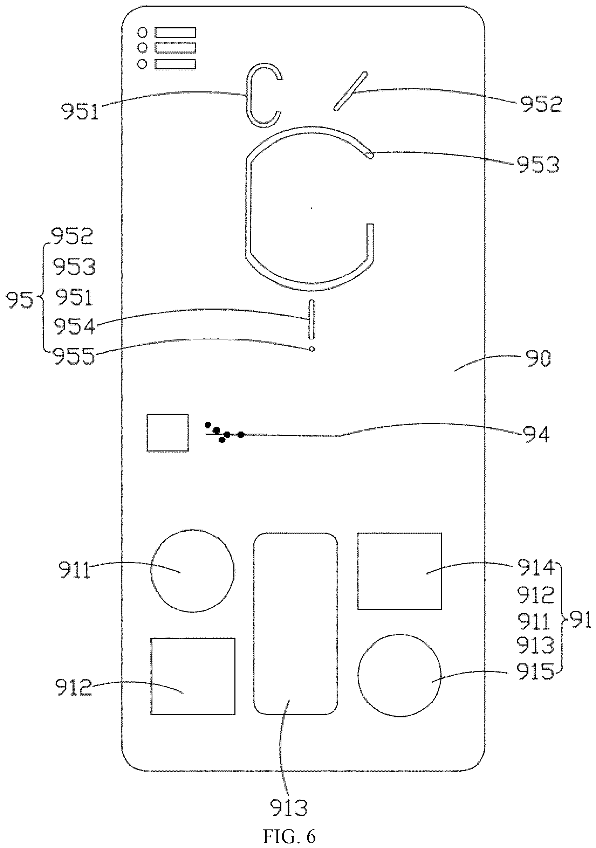

It can be understood that in some embodiments, the plurality of input areas 91 are physical keys. In other embodiments, the plurality of input areas 91 are virtual keys. In this embodiment, the display screen 9 is located on the front side of main body 1. The display screen 9 may be, but is not limited to, a touch display screen or an ordinary display screen without touch function. Referring to FIGS. 5 and 6, the processor 6 controls the display screen 9 to display an edit interface 90. The edit interface 90 includes a plurality of input areas 91. The plurality of input areas 91 are arranged at a predetermined position of the edit interface 90 according to a predetermined arrangement. In this embodiment, the plurality of input areas 91 are arranged at a bottom position of the edit interface 90 according to a preset arrangement. For example, the plurality of input areas 91 includes a first input area 911, a second input area 912, a third input area 913, a fourth input area 914, and a fifth input area 915, where the first input area 911 and the second input area 912 are located at a left side position of a bottom end of the edit interface 90; the fourth input area 914 and the fifth input area 915 are located at a right side position of the bottom end of the edit interface 90, and the third input area 913 is located at a middle position of the bottom end of the edit interface 90. The first input area 911, the second input area 912, the third input area 913, the fourth input area 914, and the fifth input area 915 also have partly the same shape and partly different shapes. Specifically, the first input area 911 is circular and is located above the second input area 912; and the second input area 912 is square and is located below the first input area 911; and the third input area 913 is waist-shaped; and the fourth input area 914 is square, and is located at the right side of the third input area 913 and above the fifth input area 915; the fifth input area 915 is circular and is located below the fourth input area 914. It can be understood that in other embodiments, the first input area 911, the second input area 912, the third input area 913, the fourth input area 914, and the fifth input area 915 are not limited to the above mentioned shapes, and the arrangement is not limited to the above mentioned arrangement, and adjustments can be made according to the actual needs, without limitation herein. The reason why the present disclosure selects five input areas 91 is that the five input areas 91 represent five notes in the line spectrum. In other embodiments, the plurality of input areas 91 may include more than 5 input areas or less than 5 input areas, without limitation herein. In other embodiments, the plurality of input areas 91 are arranged in a middle position or a top position of the edit interface 90 according to a predetermined arrangement, without limitation herein.

In some embodiments, the loudspeaker 8 is the show unit 28, the show effect is an audio effect, the effect show file includes an audio file; controlling the show unit 28 to show in accordance with the show effect corresponding to the at least one of the plurality of input areas 91 that is operated at the corresponding time in response to each of the plurality of input signals in turn, includes:
controlling the loudspeaker 8 to play in accordance with one audio effect or a combination of multiple audio effects corresponding to the at least one of the plurality of input areas 91 that is operated at the corresponding time in response to each of the plurality of input signals in turn.

Therefore, a personalized audio file can be created through the plurality of input areas 91, which can be used for telephone ringtones or information notification ringtones, for example, ringtone files can be created for different contacts to match their personalities or important programs, so that the user can be aware of the current phone call or ringtone from which contact through the ringtone, thus meeting the user's personalized needs in terms of sound effects, enhancing user experience and increasing user stickiness.

In some embodiments, the storage unit 7 of the mobile terminal 100 pre-stores a plurality of audio packages, the audio packages contains a plurality of audio effects, the plurality of audio effects correspond to the plurality of input areas respectively, the customization method for show effect further includes:
changing the audio effect corresponding to each input area 91 in response to a selection operation for different audio packages.

Therefore, according to creative needs or usage requirements, the same input area 91 may be altered to be associated with different audio effects.

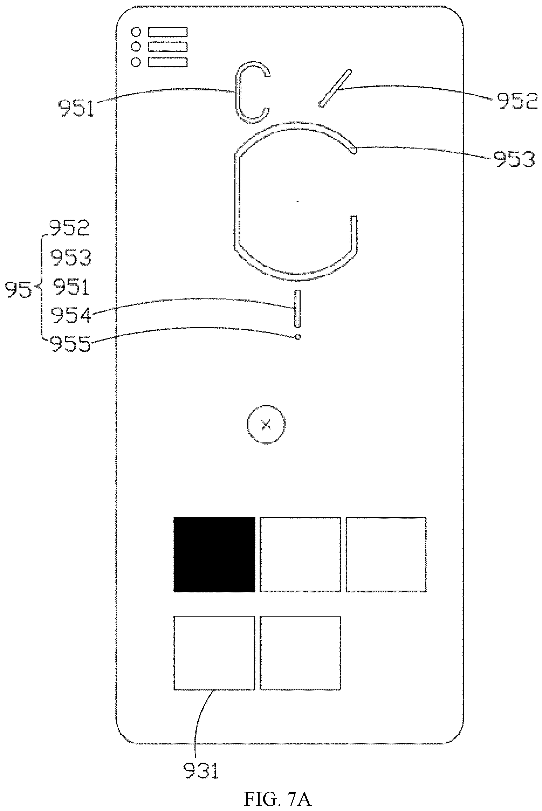

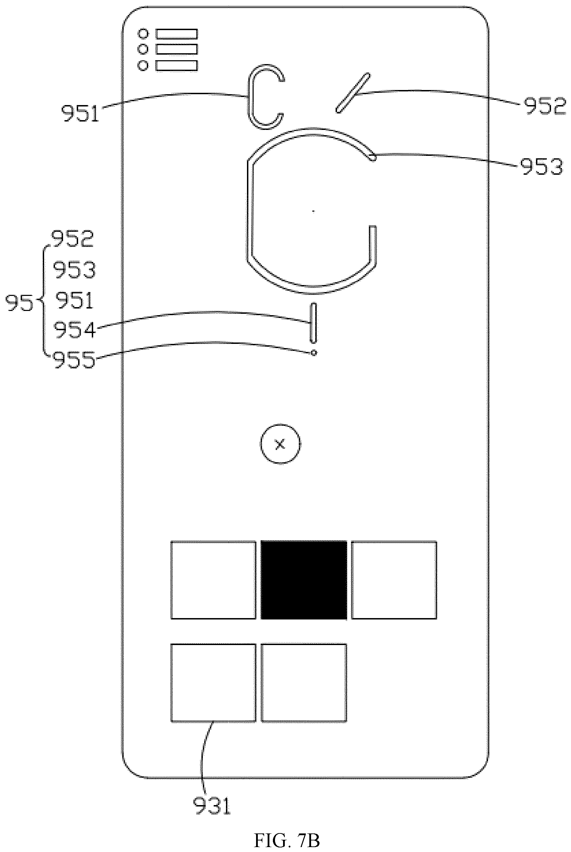

In some embodiments, referring again to FIG. 5, the mobile terminal 100 further includes an audio packet switching key 93. The audio packet switching key 93 is a virtual key or a physical key. In this embodiment, the audio packet switching key 93 is a virtual key and is located in a substantially middle position of the edit interface 90. Referring together to FIGS. 7A to 7B, FIGS. 7A to 7B illustrate schematic diagrams of a process of switching audio packets of the edit interface in accordance with one embodiment of the present disclosure. The method further includes:
displaying a plurality of audio packages 931 in response to a selection operation of the audio package switching key 93, where each of the audio packages 931 contains audio effects each corresponding to one input area 91, the audio effect corresponding to the same input area 91 in the different audio packages 931 is different (refer to FIG. 7A);
selecting one of the audio packages 931 in response to a user's selection operation applied on the one of the audio packages 931 such that each input area 91 when operated can trigger the loudspeaker 8 to play the audio effect corresponding to the operated input area 91 within the selected audio package 931 (refer to FIG. 7B).

Therefore, the audio effect corresponding to each input area 91 can be changed in response to a selection operation applied on different audio packet 931.

For example, in this embodiment, as shown in FIG. 7B, when the audio packet switching key 93 is operated, five audio packets 931 are displayed on the edit interface 90, and it can be understood that the audio effects corresponding to the same input area 91 in different audio packets 931 will be different. The audio effects may be, but are not limited to, pitch, timbre, and the like. For example, in one of the audio packages 931, the first input area 911, the second input area 912, the third input area 913, the fourth input area 914, and the fifth input area 915 correspond to the sounds of five different piano keys of a piano, respectively. In yet another audio packet 931, the first input area 911, the second input area 912, the third input area 913, the fourth input area 914, and the fifth input area 915 correspond to the sounds of different drums of a drum, respectively. In yet another audio packet 931, the first input area 911, the second input area 912, the third input area 913, the fourth input area 914, and the fifth input area 915 correspond to the sounds of different strings of a violin, respectively. So on, and so forth, without limitation herein.

In some embodiments, in a process of displaying the plurality of audio packages 931 for the user to select one of the plurality of audio packages 931, when one of the plurality of audio packages 931 is selected, the method further includes:
controlling the loudspeaker 8 to play an audio effect of the audio package 931 corresponding to one of the input areas 91, for the user to recognize the relevant audio content style of the audio package 931, thereby assisting the user in making a selection of the audio package 931.

It can be understood that after different audio packages 931 are selected, the lighting effects of the at least one virtual lighting strip 95 and the at least one physical lighting strip 2, such as, for example, the flashing frequency or the brightness, etc., will be changed accordingly depending on the selected audio package 931.

In another embodiment, referring again to FIGS. 5 and 6, the edit interface 90 displays at least one virtual lighting strip 95 matching at least one physical lighting strip 2 respectively, and a pattern formed by the at least one virtual lighting strip 95 is consistent with a pattern formed by the at least one physical lighting strip 2. The at least one virtual lighting strip 95 are provided in one-to-one correspondence with the at least one physical lighting strip 2. The at least one virtual lighting strip 95 include a first virtual lighting strip 951, a second virtual lighting strip 952, a third virtual lighting strip 953, a fourth virtual lighting strip 954, and a fifth virtual lighting strip 955. The first virtual lighting strip 951, the second virtual lighting strip 952, the third virtual lighting strip 953, the fourth virtual lighting strip 954, and the fifth virtual lighting strip 955 correspond to the first physical lighting strip 21, the second physical lighting strip 22, the third physical lighting strip 23, the fourth physical lighting strip 24 and the fifth physical lighting strip 25, respectively. The first input area 911, the second input area 912, the third input area 913, the fourth input area 914 and the fourth input area 915 correspond to one of the first virtual lighting strip 951, the second virtual lighting strip 952, the third virtual lighting strip 953, the fourth virtual lighting strip 954, and the fifth virtual lighting strip 955, respectively. In some embodiment, the at least one virtual lighting strip 95 is the show unit 28, the effect show file includes the lighting effect file. The show effect is the lighting effect. Controlling the show unit 28 to show in accordance with the show effect corresponding to the at least one of the plurality of input areas 91 that is operated at the corresponding time in response to each of the plurality of input signals in turn, including:
controlling the corresponding virtual lighting strip 95 to be illuminated in accordance with a illumination method of one lighting effect corresponding to the input area 91 that is operated at the corresponding time, or a combination of multiple lighting effects corresponding to the input areas that are operated at the corresponding time, in response to each of the plurality of input signals in turn.

Therefore, it is also possible to create a personalized lighting effect file through the at least one of the plurality of input areas 91, and in a process of creating the lighting effect file, simulate displaying the show effect of the corresponding physical lighting strip 2 through the corresponding virtual lighting strip 95, which can be used for the personalized show, and after completing the creation of the lighting effect file, when playing the lighting effect file, the lighting effect will be showed by the physical lighting strip 2. For example, the lighting effect file can be created for different contacts to match their personalities or important procedures, so that the user can know which contact the current phone call or ringtone comes from through the lighting effect, thus satisfying the user's personalized needs in terms of lighting effect, enhancing the user experience, and improving the user stickiness. Moreover, when operating the input area 91, the corresponding virtual lighting strip 95 simulates the lighting effect, which allows the user to understand the lighting effect at the same time, so that when the user is not satisfied with the lighting effect, the user can adjust the rhythm of the operation of the input area 91 or adjust the corresponding relationship between the input area 91 and the virtual lighting strip 95 in time, to get a better lighting effect.

In some other embodiments, the at least one physical lighting strip 2 is the show unit 28, and the show effect includes the lighting effect; controlling the show unit 28 to show in accordance with the show effect corresponding to the at least one of the plurality of input areas 91 that is operated at the corresponding time in response to each of the plurality of input signals in turn, includes:
controlling the corresponding physical lighting strip 2 to be illuminated in accordance with a illumination method of one lighting effect corresponding to the input area 91 that is operated at the corresponding time or a combination of multiple lighting effects corresponding to the input areas 91 that are operated at the corresponding time in response to each of the plurality of input signals in turn.

Therefore, it is also possible to create a personalized lighting effect file through the plurality of input areas 91, and in a process of creating the lighting effect file, displaying the show effect of the corresponding physical lighting strip 2 through the corresponding physical lighting strip 2, which can be used for the personalized show, and after completing the creation of the lighting effect file, when playing the lighting effect file, the lighting effect will be still showed by the at least one physical lighting strip 2. For example, the lighting effect file can be created for different contacts to match their personalities or important procedures, so that the user can know which contact the current phone call or ringtone comes from through the lighting effect, thus satisfying the user's personalized needs in terms of lighting effect, enhancing the user experience, and improving the user stickiness.

In some embodiments, the loudspeaker 8 is the show unit 28, and at least one of the at least one physical lighting strip 2 and the at least one virtual lighting strip 95 is also the show unit 28. Therefore, the loudspeaker 8 and at least one of the at least one physical lighting strip 2 and the at least one virtual lighting strip 95 are controlled to show in accordance with the show effect corresponding to the at least one of the plurality of input areas 91 that is operated at the corresponding time in response to the input signal. Since the input area 91 is set in correspondence with the loudspeaker 8, the physical lighting strip 2 and the virtual lighting strip 95 at the same time, when a plurality of input areas 91 are operated, not only the audio but also the lighting effect will be output, which can simultaneously meet the user's personalized needs in terms of the sound and lighting effects, enhance user experience and increase user stickiness.

In other embodiments, the loudspeaker 8, the at least one physical lighting strip 2, and the at least one virtual lighting strip 95 are all the show unit 28. Therefore, the loudspeaker 8, the at least one physical lighting strip 2, and the at least one virtual lighting strip 95 are controlled to be showed in accordance with a show effect corresponding to the at least one of the plurality of input areas 91 that is operated at the corresponding time in response to the input signal. Since the input area 91 is set to correspond to both the loudspeaker 8, the at least one physical lighting strip 2 and the at least one virtual lighting strip 95, when more than one input area 91 is operated, not only audio is output, but also lighting effects are output, and the at least one physical lighting strip 2 and the at least one virtual lighting strip 95 are controlled to output the lighting effect at the same time, which can satisfy the user's personalized needs in both sound and lighting effects at the same time, enhance the user experience, and improve the user stickiness.

In some embodiments, the input area 91 has a predetermined correspondence with the physical lighting strip 2 and the virtual lighting strip 95, and the customization method for show effect further includes:
changing the correspondence between input area 91, the physical lighting strip 2 and the virtual lighting strip 95 in response to an editing operation, where the correspondence is a one-to-many, or, a one-to-one.

In some embodiments, the back side 11 of the main body 1 is divided into a plurality of areas, where the first area 31 is a camera area, the second area 32 located side by side with the first area 31 is another area, the third area 33 is a wireless charging coil area, and the fourth area 34 is a charging port area. An area may correspond to one or more physical lighting strips 2, for example, the physical lighting strip 2 in the fourth area 34 can be interrupted to 2 strips that can be individually controlled, and the input area 91 may correspond to the physical lighting strip 2 of an area, or a separate physical lighting strip 2 of an area.

In some embodiments, the customization method for show effect further includes:
when a quantity of the at least one physical lighting strip 2 is greater than a quantity of the input areas 91, establishing a corresponding control relationship between the at least one physical lighting strip 2 and the input area 91 in accordance with a positional relationship of the at least one physical lighting strip 2.

Therefore, for one physical lighting strip 2 located in the same area, it can be controlled by one input area 91, and for more than one physical lighting strip 2 located in the same area, they can be controlled by one input area 91, or they can be controlled respectively by more than one input area 91. Of course, for different physical lighting strips 2 in different areas, they can also be controlled by the same input area 91, without limitation herein.

In some embodiments, referring again to FIG. 5, the mobile terminal 100 further includes a recording key 92. The recording key 92 may be a virtual key or a physical key. In this embodiment, the recording key 92 is a virtual key disposed on the edit interface 90 and located above the plurality of input areas 91. Recording the show effect corresponding to each of the plurality of input signals to generate an effect show file, includes:
generating a recording signal in response to a user operation applied on the recording key 92;
generating an effect show file matching the plurality of input signals by recording the respective show effect corresponding to each of the plurality of input signals in response to the recording signal.

Therefore, when there is a need to record the effect show file, after operating the recording key 92, the output effects showed by the show unit 28 will start to be recorded to generate the effect show file, and when there is no need to record the effect show file, it is also possible to personalize the creation of the show effect by sequentially operating the plurality of input areas 91, but it will not be recorded.

It can be understood that in other embodiments, the recording signal is not limited to being generated in response to a user operation of the recording key 92, but may also be a control signal generated in response to a recording gesture, which may be, but is not limited to, gestures such as double tapping the screen, drawing a circle, drawing an 8, and the like, and is not limited herein.

In some embodiments, the recording key 92 is equivalent to a control key for recording on or off. That is, when the recording key 92 is operated odd times, the recording work will start; conversely, when the recording key 92 is operated even times, the recording work will be paused.

In some embodiments, please referring together to FIG. 6, FIG. 6 illustrates an edit interface view in accordance with one embodiment of the present disclosure when recording and generating an effect show file.

In some embodiments, the method further includes:
during the recording of the effect show file, controlling a color displayed by the currently operated input area 91 to be different from a color displayed by other input areas 91 that are not operated. For example, in FIG. 6, the operated first input area 911 displays red color, and the second input area 912, the third input area 913, the fourth input area 914, and the fifth input area 915 which are not operated display gray color. Thereby, the user can be aware of the currently operated input area by displaying the color, and can give the user a different creative experience by changing the color, which can improve the user experience capability.

In other embodiments, the colors displayed when different input areas 91 are operated may be different, for example, when the first input area 911 is operated, the first input area 911 displays red; when the second input area 912 is operated, the second input area 912 displays green, and so on. This gives the user a colorful and creative experience.

In some embodiments, referring again to FIG. 6, the method also includes:
controlling a line spectrum 94 to be displayed on the edit interface 90;
making a corresponding mark on the line spectrum 94 based on the plurality of input signals to generate a show line spectrum. The how line spectrum may be, but is not limited to, a lighting effect show line spectrum, and may also be an audio show line spectrum.

In some embodiments, after controlling the line spectrum 94 to be displayed on the edit interface 90, the customization method for show effect further includes:
marking a corresponding mark on the line spectrum 94 in accordance with the at least one of the plurality of input areas that is operated at the corresponding time and an operation time to generate a corresponding show line spectrum, where different input areas correspond to different vertical coordinates of the line spectrum.

Specifically, during a process of recording the effect show file, the edit interface 90 is controlled to display the line spectrum 94, which is located at a position approximately in a middle of the edit interface 90. When the audio package 931 is selected, the middle position of the edit interface 90 is configured to display the audio package switching key 93. When the audio package 931 is identified and the recording process is entered, the audio package switching key 93 will no longer be displayed, and will be replaced by the line spectrum 94. The line spectrum 94 is a progress display bar with the time as a horizontal coordinate, and the key value of the input area 91 as a vertical coordinate. When one of the input areas 91 is operated at a certain time, an input signal is generated and a corresponding mark is made on the line spectrum 94 in the coordinate system according to the input signal, specifically, a point with the time at which the input signal is generated as the horizontal coordinate and a key value of the input area 91 as the vertical coordinate will be marked to generate the show line spectrum. The show line spectrum may be an audio line spectrum and/or a lighting effect line spectrum.

In this embodiment, the input areas 91 include a first input area 911, a second input area 912, a third input area 913, a fourth input area 914, and a fifth input area 915, and thus, in the vertical axis, the first input area 911, the second input area 912, the third input area 912, the fourth input area 914 and the fifth input area 915 are assigned for different vertical coordinates respectively, i.e., the values of the vertical coordinates corresponding to the different input areas 91 are different. For example, if the first input area 911 is operated at the first moment, a point at which the vertical coordinate corresponding to the first input area 911 intersects the horizontal coordinate corresponding to the first moment will be marked. For example, if the vertical coordinate assigned to the first input area 911 is zero, then, subsequent moments in which the first input area 911 is operated will be marked in an area in which the vertical coordinate is zero. The vertical coordinate assigned to the second input area 912 is 1, then, subsequent moments in which the second input area 912 is subsequently operated will be marked in an area in which the vertical coordinate is one.

In another embodiment, not only the moment at which the input area 91 is operated by start is marked, but also the duration of the operation can be marked, for example, if the first input area 911 is operated between the first moment and the second moment, the duration between the first moment and the second moment on a track corresponding to the first input area 911 is marked.

Therefore, the first input area 911, the second input area 912, the third input area 913, the fourth input area 914, and the fifth input area 915 of the present disclosure are equivalent to five musical notes, When any one of the first input area 911, the second input area 912, the third input area 913, the fourth input area 914 and the fifth input area 915 is operated, a position where the corresponding vertical coordinate of the line spectrum 94 and the corresponding time point intersect will be marked, allowing the user's creations to be recorded at any time and any place.

In some embodiments, the method further includes:
performing editing, expanding, and other operations on the effect show file to obtain a final version of the effect show file, to achieve the duration, noise, and other requirements.

In some embodiments, the duration of the effect show file is limited, e.g., 10s or other duration.

In some embodiments, the effect show file includes at least one of an audio file and a lighting effect file; the show unit 28 includes at least one of the loudspeaker 8, the at least one physical lighting strip 2, and the at least one virtual lighting strip 95. After generating the effect show file, the effect show file can be played to show the corresponding show effect. Specifically, the customization method for show effect also includes:
when the show unit 28 includes the loudspeaker 8, controlling the loudspeaker 8 to play an audio file in the effect show file; and/or
when the show unit 28 includes the physical lighting strip 2 or the virtual lighting strip 95, controlling the physical lighting strip 2 to display the lighting effect in accordance with a lighting effect file in the effect show file.

Therefore, after the creation of the effect show file is completed, the audio file of the effect show file can be played through the loudspeaker 8, and the lighting effect file in the effect show file can be showed through the physical lighting strip 2.

In some embodiments, the method further includes:
splicing the effect show file with another segment of the audio effect file that is preset.

Therefore, a section of the effect show file, without having to create independently from beginning to end, but only making a section of its own sound effect file that it prefers, and then splicing it with a section of the sound effect file prestored in the system, not only meets the need for personalization, but also simplifies the creation process and brings a different experience to the user and improves the user experience.

In another embodiment, the method further includes:
importing an effect show file;
generating an updated effect show file by modifying at least part of parameters of the effect show file through the input areas 91.

Therefore, the effect show file is imported and the effect show file is played back, and during playback, when it is determined that one of the segments needs to be reformulated or modified based on the operation of the user, a plurality of input signals are generated in response to a plurality of operations applied on at least one of the plurality of input areas 91, where the plurality of input signals are arranged in chronological order, and a quantity of the input areas 91 being operated on each time includes at least one, and the input areas 91 being operated on each time are the same or at least partially different, and each of the plurality of input signals is generated by the at least one of the plurality of input areas 91 that is operated at the corresponding time, and each of the input areas 91 has a predetermined show effect; the show unit 28 is controlled to show in accordance with the show effect corresponding to the at least one of the plurality of input areas 91 that is operated at the corresponding time in response to the plurality of input signals in turn; the show effect corresponding to each of the plurality of input signals is recorded to generate an effect show file. When the user is not satisfied with only some of the notes of the current sound effect file and needs to change some of the notes, the user can import the show effect file, play the show effect file, and during the playback process, change the part that needs to be changed to generate the show effect file, and splice the show effect file with the part that needs no modification of the preset sound effect file to generate the updated show effect file in time sequence, which reduces the difficulty of the user's creation, achieves personalized needs, and improves the user experience.

In some embodiments, the method further includes:
providing a database of effect show recommendation files;
selecting one effect show recommendation file from the database of effect show recommendation files based on keywords input by a user and displaying the same;
modifying at least some parameters of the effect show recommendation file through the plurality of input areas 91 to generate an updated effect show file.

Therefore, according to the keywords inputted by the user, one of the effect show recommendation files is selected from the database of effect show recommendation files and played; in the process of playing the effect show recommendation file, it is determined whether a certain paragraph of the effect show recommendation file needs to be modified; if so, a plurality of input signals are generated in response to a plurality of operations applied on at least one of the plurality of input areas 91, where the plurality of input signals are arranged in chronological order, and a quantity of the input areas 91 being operated on each time includes at least one, and the input areas 91 being operated on each time are the same or at least partially different, and each of the plurality of input signals is generated by at least one of the plurality of input areas 91 that is operated at the corresponding time, and each of the input areas 91 has a predetermined show effect; the show unit 28 is controlled to show in accordance with the show effect corresponding to the at least one of the plurality of input areas 91 that is operated at the corresponding time in response to the plurality of input signals in turn; the show effect corresponding to each of the plurality of input signals is recorded to generate an effect show file, and the updated show effect file is generated by splicing the show effect file with the part that does not need to be modified in the effect show recommendation file in chronological order. The keywords may be, but are not limited to, a song style, a tune, an application scene, a mood, a character trait, and the like, for example, folk music, light, quiet, and the like. The database of effect show recommendation files stores tunes of various styles for various scenarios, and each tune is labeled with a corresponding tag, for example, rock, folk, etc. According to the input keywords, the system can recommend one or more tunes suitable for the current keywords for the user to make a choice. After selecting the effect show recommendation file, it can also make some local changes to the effect show recommendation file based on the user's input, so as to be able to further achieve the personalized scene requirements, and, moreover, it can simplify the difficulty of the user's creation and improve the user experience.

In some embodiments, the method further includes:
storing the effect show file when the effect show file is generated;
calling the effect show file by a setting application or other program and setting as a reminder sound for a certain person, an app, or a certain type of message, so that personalization needs can be met.

In some embodiments, the method further includes:
sharing the effect show file to the network or other people by any one of the sharing methods, so that the personalization needs can be met.

The present disclosure also provides a computer-readable storage medium. The computer-readable storage medium stores a computer program, the computer program is capable of being executed by a processor run:
generating a plurality of input signals in response to a plurality of times of operations applied on the at least one of the plurality of input areas 91, respectively; where the plurality of input signals are arranged in chronological order, and a quantity of the input areas being operated on each time includes at least one, and the input areas being operated on each time are the same or at least partially different, and each of the plurality of input signals is generated by the the at least one of the plurality of input areas 91 that is operated at the corresponding time, and each of the input areas 91 has a predetermined show effect;
controlling the show unit 28 to show in accordance with the show effect corresponding to the at least one of the plurality of input areas 91 that is operated at the corresponding time in response to each of the plurality of input signals in turn;
recording the show effect corresponding to each of the plurality of input signals to generate an effect show file.

In addition, the steps of the method disclosed in the embodiments of the present disclosure can be directly embodied in a hardware decoding processor, or can be performed by a combination of hardware and software modules in the decoding processor. The software module may be located in a random storage unit, a flash memory, a read-only storage unit, a programmable read-only storage unit or an electrically erasable programmable storage unit, a register, and other storage media mature in the field. The storage medium is located in a storage unit, such as a processor 6 that can read applications, computer instructions, or data in the storage unit, in combination with its hardware to accomplish the steps of the method described above performed by the mobile terminal 100.

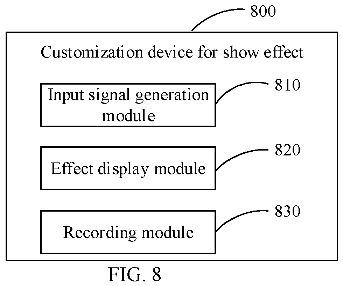

Referring to FIG. 8, FIG. 8 illustrates a module diagram of a show effect customization device 800 in accordance with one embodiment of the present disclosure.

In some embodiments, the customization device for show effect 800, includes: an input signal generation module 810, an effect display module 820 and a recording module 830.

The input signal generation module 810 is configured for generating a plurality of input signals in response to a plurality of times of operations applied on at least one of the plurality of input areas 91, respectively; where the plurality of input signals are arranged in chronological order, and a quantity of the input areas being operated on each time includes at least one, and the input areas being operated on each time are the same or at least partially different, and each of the plurality of input signals is generated by the at least one of the plurality of input areas 91 that is operated at the corresponding time, and each of the input areas 91 has a predetermined show effect.

The effect display module 820 is configured for controlling the show unit 28 to show in accordance with the show effect corresponding to the at least one of the plurality of input areas 91 that is operated at the corresponding time in response to each of the plurality of input signals in turn.

The recording module 830 is configured for recording the show effect corresponding to each of the plurality of input signals to generate an effect show file.

In several embodiments provided in the present disclosure, it should be understood that the disclosed customization device for show effect 800 may be implemented in other ways. For example, the above-described embodiments of the customization device for show effect 800 are merely schematic, e.g., the division of the units described is merely a logical functional division, and the actual implementation may be divided in other ways, e.g., a plurality of units or components may be combined or may be integrated into another system, or some features may be ignored, or not implemented. Another point is that the mutual coupling or direct coupling or communication connection shown or discussed may be an indirect coupling or communication connection through some interface, device or unit, which may be electrical or otherwise.

The above technical program of the subject matter of the present disclosure and the corresponding details are introduced, it can be understood that the above introduction is only some of the embodiments of the technical program of the subject matter of the present disclosure, and some of the details can also be omitted in its specific implementation.

In addition, in some of the above embodiments of the present disclosure, there are multiple embodiments of the combination of the implementation of the possibility of a variety of combinations of programs limited to space will not be listed. The technical personnel in the field can freely combine the implementation of the above embodiments according to the needs of the specific implementation, in order to obtain a better application experience.

.

## Claims

1. A method of customizing a show effect, applied to a mobile terminal, wherein the mobile terminal comprises an edit interface and a show unit, the edit interface comprising a plurality of input areas, the method comprising:
generating a plurality of input signals in response to a plurality of times of operations applied on at least one of the plurality of input areas, respectively; wherein the plurality of input signals are arranged in chronological order, at least one of the plurality of input areas being operated on each time, and the input areas being operated on each time are the same or at least partially different, and each of the plurality of input signals is generated by at least one of the plurality of input areas that is operated at the corresponding time, and each of the input areas has a predetermined show effect;
controlling the show unit to show in accordance with the show effect corresponding to the at least one of the plurality of input areas that is operated at the corresponding time in response to each of the plurality of input signals in turn;
recording the show effect corresponding to each of the plurality of input signals to generate an effect show file.

2. The method in accordance with claim 1, wherein the controlling the show unit to show in accordance with the show effect corresponding to the at least one of the plurality of input areas that is operated at the corresponding time in response to each of the plurality of input signals in turn, comprises:
determining the at least one of the plurality of input areas that is operated at the corresponding time for each of the plurality of input signals, wherein each of the plurality of input signals comprises a signal generated by one of the plurality of input areas that is operated at the corresponding time, or a combination of signals generated by multiple of the plurality of input areas that are operated at the corresponding time;
determining a target show effect corresponding to each of the plurality of input signals in accordance with a correspondence between the input area and the show effect;
controlling the show unit to show in accordance with the target show effect corresponding to each of the plurality of input signals.

3. The method in accordance with claim 1 or claim 2, wherein the generating a plurality of input signals in response to a plurality of times of operations applied on at least one of the plurality of input areas comprises:
generating different input signals in response to different operations on the same input area, the different input signals corresponding to different show effects, the different operations comprising operations having at least one of a different operation duration, a different operation pressure, and/or a different sliding speed; the different show effects comprising a show effect having at least one of a different volume, a different tone, a different light color, a different light brightness, a different light-up duration, or a different flashing times.

4. The method in accordance with any preceding claim, wherein the mobile terminal comprises a loudspeaker; the show unit comprises the loudspeaker, the show effect comprises an audio effect, the effect show file comprises an audio file, and controlling the show unit to show in accordance with the show effect corresponding to the at least one of the plurality of input areas that is operated at the corresponding time in response to each of the plurality of input signals in turn comprises:
controlling the loudspeaker to operate in accordance with audio effect corresponding to the at least one of the plurality of input areas that is operated at the corresponding time in response to each of the plurality of input signals in turn.

5. The method in accordance with claim 4, wherein the mobile terminal pre-stores a plurality of audio packages, the audio packages contain a plurality of audio effects, the plurality of audio effects correspond to the plurality of input areas respectively, and wherein the customization method for show effect further comprises:
changing the audio effect corresponding to each input area in response to a selection operation for different audio packages.

6. The method in accordance with claim 2, wherein the mobile terminal further comprises a main body, a display screen disposed on a front side of the main body, and at least one physical lighting strip disposed on a back side of the main body, wherein the display screen displays the edit interface, the edit interface displaying at least one virtual lighting strip matching the at least one physical lighting strip respectively, there is a corresponding control relationship between the plurality of input areas, the at least one virtual lighting strip and the at least one physical lighting strip; the show unit comprises the at least one virtual lighting strip; the show effect comprises a lighting effect; and controlling the show unit to show in accordance with the show effect corresponding to the at least one of the plurality of input areas that is operated at the corresponding time in response to each of the plurality of input signals in turn comprises:
controlling the corresponding virtual lighting strip to be illuminated in accordance with an illumination method of one lighting effect corresponding to the input area that is operated at the corresponding time, or the corresponding virtual lighting strips to be illuminated in accordance with a combination of multiple lighting effects corresponding to the input areas that are operated at the corresponding time, in response to each of the plurality of input signals in turn.

7. The method in accordance with claim 4, wherein the mobile terminal further comprises a main body, and at least one physical lighting strip disposed on a back side of the main body; the show unit comprises the at least one physical lighting strip, and the show effect is a lighting effect; and controlling the show unit to show in accordance with the show effect corresponding to the at least one of the plurality of input areas that is operated at the corresponding time in response to each of the plurality of input signals in turn comprises:
controlling the corresponding physical lighting strip to be illuminated in accordance with an illumination method of one lighting effect corresponding to the input area that is operated at the corresponding time, or, the corresponding physical lighting strips to be illuminated in accordance with a illumination method of a combination of multiple lighting effects corresponding to the input areas that are operated at the corresponding time, in response to each of the plurality of input signals in turn.

8. The method in accordance with claim 6, wherein the customization method for show effect further comprises:
when a quantity of the at least one physical lighting strip is greater than a quantity of the input areas, establishing a corresponding control relationship between the physical lighting strip and the input area in accordance with a positional relationship of the at least one physical lighting strip.

9. The method in accordance with claim 6, wherein the customization method for show effect further comprises:
controlling a line spectrum to be displayed on the edit interface;
making a corresponding mark on the line spectrum based on the plurality of input signals to generate a lighting effect show line spectrum.

10. The method in accordance with claim 9, wherein after controlling the line spectrum to be displayed on the edit interface, the method further comprises:
marking a corresponding mark on the line spectrum in accordance with the at least one of the plurality of input areas that is operated at the corresponding time and an operation time to generate a corresponding line spectrum for light show effect, wherein different input areas correspond to different vertical coordinates of the line spectrum.

11. The method in accordance with any one of claims 1 to 10, wherein the method further comprises:
importing an effect show file;
generating an updated effect show file by modifying at least part of parameters of the effect show file through the at least one of the plurality of input areas.

12. The method in accordance with any one of claims 1 to 10, wherein the method further comprises:
providing a database of effect show recommendation files;
selecting one effect show recommendation file from the database of effect show recommendation files based on keywords input by a user and displaying the same;
modifying at least part of the parameters of the effect show recommendation file through the at least one of the plurality of input areas to generate an updated effect show file.

13. A mobile terminal, wherein the mobile terminal comprises an edit interface and a show unit, the edit interface comprises a plurality of input areas, the mobile terminal further comprises a processor and a storage unit, the storage unit stores a computer program, and wherein the processor is configured to run the computer program to execute the method as claimed in any one of claims 1 to 12.

14. The mobile terminal in accordance with claim 13, wherein the mobile terminal further comprises a main body, at least one physical lighting strip disposed at a back side of the main body, the mobile terminal further comprises a display screen disposed at a front side of the main body, the processor controls the display screen to display an edit interface, the edit interface displays at least one virtual lighting strip matching the at least one physical lighting strip respectively, the mobile terminal further comprises a loudspeaker, and wherein the show unit comprises at least one of the at least one physical lighting strip, the at least one virtual lighting strip and/or the loudspeaker.

15. A computer readable storage medium, wherein the computer readable storage medium stores a computer program, the computer program is capable of being run by a processor to perform the method as claimed in any one of claims 1 to 12.
